# EUROPÄISCHE PATENTANMELDUNG

(11) **EP 4 292 785 A1**
(43) Veröffentlichungstag der Anmeldung: **20.12.2023**
(21) Anmeldenummer: 23173684.4
(22) Anmeldetag: 16.05.2023
(51) Int. Cl.: B26D 7/01, B26D 7/06, A22C 17/00

(54) **AUFSCHNEIDE-MASCHINE SOWIE VERFAHREN ZUM AUFSCHNEIDEN EINES PRODUKT-STÜCKES IN SCHEIBEN**

(30) Priorität: 13.06.2022 DE 102022114771
(71) Anmelder: TVI Entwicklung und Produktion GmbH, 83052 Bruckmühl (DE)
(72) Erfinder: MEß, Jan, 83071 Stephanskirchen (DE)
(74) Vertreter: Weickmann & Weickmann PartmbB

(57) **Zusammenfassung**

Beim Aufschneiden eines Fleischstückes ohne Anschlagplatte aus einem Formrohr (1) heraus, welches keinen Quer-Pressstempels aufweist oder dessen Quer-Pressstempels (5.1) in einer bestimmten Querposition vor dem Aufschneiden fixiert wird, kann sich das Fleischstück (100) in axialer Richtung (10) ausdehnen, dadurch schlanker werden und dadurch die Reibung zum umgebenden Formrohr (1) so weit zurückgehen, dass es unbeabsichtigt zu weit nach unten rutschen kann. Um dies zu vermeiden wird ein radial auf das Fleischstück (100) einwirkendes Bremselement (9) im Formrohr (1) vorgesehen.

## Beschreibung

### I. Anwendungsgebiet

Aufschneide-Maschinen und Verfahren zum Aufschneiden von Produkt-Stücken aus elastischem Material in gewichtsgenaue Scheiben oder Scheiben-Stücke werden vor allem in der Lebensmittel-Industrie benötigt.

### II. Technischer Hintergrund

Das Material des aufzuschneidenden Produkt-Stückes kann insbesondere Fleisch oder Fisch oder ein anderes Lebensmittel sein.

Dabei ist zu unterscheiden zwischen
- einerseits länglichen Produkt-Stücken mit über die Länge gleichbleibenden Querschnitt, die dann meist Kaliber oder Strang genannt werden, und beispielsweise aus Wurst oder Käse bestehen
   und
- andererseits länglichen Produkt-Stücken, bei denen sich der Querschnitt über deren Länge ändert, wie etwa Stücke aus gewachsenem Fleisch, im folgenden weiterhin Produkt-Stück genannt.

Denn um daraus dünne Scheiben etwa gleichen Volumens und damit gleichen Gewichts zu erzeugen, muss ein gleichmäßiges Kaliber lediglich immer um die gleiche Vorschubstrecke für das Abtrennen einer immer gleich dicken Scheibe vorwärtsgefahren werden, wofür sogenannte Slicer bekannt sind, die die Scheiben mit einer sehr hohen Taktfrequenz abtrennen.

Bei den ungleichmäßigen Produkt-Stücken wird dies im Stand der Technik erreicht, indem das Produkt-Stück zunächst in einem Formrohr zu einem Kaliber mit über die Länge gleichbleibendem inneren Querschnitt verpresst wird, sodass dass Kaliber dessen Formrohr-Hohlraum möglichst vollständig ausfüllt, möglichst auch in seinen Endbereichen.

Dann können durch Vorgeben der Scheiben-Dicke durch entsprechendes Vorwärtsschieben aus dem Formrohr heraus meist bis zu einem Anschlag-Blech und Abtrennen dieses Überstandes gewichtsgenaue Scheiben abgetrennt werden, dann meist dickere Scheiben-Stücke wie etwa Steaks aus einem Filet-Stück.

Ferner ist es bekannt, dass das Formrohr einen in mindestens einer Querrichtung veränderbaren Querschnitt des Formrohr-Hohlraumes aufweist, um Produkt-Stücke mit unterschiedlich großem Querschnitt einbringen und verpressen zu können.

Hierfür kann ein in eine Formrohr-Rinne von deren offener Längsseite her einfahrbarer Quer-Pressstempel verwendet werden zusätzlich zu dem in Längsrichtung in das dann umfänglich geschlossene Formrohr einfahrbaren Längspress-stempel.

Ferner ist es bekannt, in einem Formrohr-Revolver mehrere hinsichtlich ihres Querschnittes unterschiedlich große und/oder unterschiedlich geformte Formrohre vorzusehen, die wahlweise benutzt werden können, und die darüber hinaus bei je zwei gleichen Formrohren zusätzlich ein Beladen des einen der beiden gleichen Formrohre ermöglicht, während aus dem anderen Formrohr heraus momentan Scheiben aufgeschnitten werden.

Beim Aufschneiden gibt es auch Arbeits-Aufträge, bei denen das zu verpressende Produkt-Stück vor dem Abschneiden stirnseitig nicht gegen einen Anschlag gefahren wird, was somit die grundsätzliche Gefahr in sich birgt, dass das Produkt-Stück zu weit vorwärts geschoben wird und eine Ist-Dicke größer als die Soll-Dicke abgetrennt wird, also bei gewichtsgenau abzutrennenden Scheiben zu schwere Scheiben oder Scheiben-Stücke produziert werden, wie etwa Filet-Steaks vom Schwein, deren Dicke oft genauso oder gar größer ist wie der größte Durchmesser ihrer Scheibenfläche, also Schnittfläche, und die vorliegend deshalb Scheiben-Stücke genannt werden.

Diese Gefahr besteht vor allem bei lediglich in Längsrichtung im Formrohr verpressten Produkt-Stücken, da beim Vorwärtsschieben ohne vorderen Anschlag sich das Produkt-Stück in einer relativ kurzen Zeit rückverformen, also in Längsrichtung dehnen, kann und dadurch aufgrund der Durchmesser-Reduzierung die Reibung gegenüber dem Formrohr stark nachlassen kann, vor allem wenn das unverpresste Produkt-Stück ohnehin zum hinteren Ende hin einen abnehmenden Querschnitt besaß.

Deshalb werden Arbeitsaufträge ohne Anschlag, beispielsweise für Scheiben-Stücke für einen Braten, in der Regel meist mit Aufschneide-Maschinen umgesetzt, bei denen das Produkt-Stück im Formrohr außer dem am hinteren Ende des Produkt-Stückes angesetzten Längs-Pressstempel auch in Querrichtung mittels eines Quer-Pressstempels verpresst wird.

Die vom Quer-Pressstempel auf das Produkt-Stück aufgebrachte Quer-Presskraft hängt - vor allem bei fehlendem Längs-Anschlag - jedoch dann davon ab, ob der Quer-Pressstempel Positions-gesteuert oder Kraft-gesteuert ist:
Bei auf eine bestimmte Querposition eingefahrenem, also Positions-gesteuertem, Quer-Pressstempel ist die Situation annähernd die gleiche wie bei einem Formrohr, in dem ausschließlich Längsverpressung durch einen Längs-Pressstempel praktiziert werden kann.

Bei einem kraftgesteuerten Quer-Pressstempel würde die mangels Längsanschlag auch im Formrohr stattfindende Längung des verpressten Produkt-Stückes zu einem weiteren Vorwärtsfahren des Quer-Pressstempels bis zur vorgegebenen, eingestellten Quer-Presskraft gegenüber dem Produkt-Stück erfolgen.

Die Gefahr eines Durchrutschens in Längsrichtung mittels der vom Längs-Pressstempel für das Vorwärtsschieben aufgebrachten Vorschub-Kraft ist dann kaum gegeben.

Allerdings ist ein Quer-Pressstempel in der überwiegenden Mehrzahl der Fälle Positions-gesteuert, denn bei einem Kraft-gesteuerten Quer-Pressstempel muss der verwendete Längs-Pressstempel in mindestens einer seiner Haupt-Richtungen stufenlos variabel sein, was man vermeiden möchte.

In diesem Zusammenhang ist es bei Aufschneide-Maschinen, bei denen das Produkt-Stück ohnehin nicht in einem umfänglich geschlossenen Formrohr und unter Anliegen einer Presskraft geführt ist, sondern lediglich auf einer stillstehenden oder mitlaufenden Unterlage in Richtung Schneideinheit geführt wird, etwa bei sogenannten Slicern, bekannt, das zu weite Vorwärtsbewegen des Produkt-Stückes dadurch zu verhindern, dass dessen hinteres Ende durch einen Greifer gehalten ist, der mit dem hinteren Ende des Produkt-Stückes mit nach vorne bewegt wird.

Dies jedoch bei einem in Längsrichtung verpressenden Längs-Pressstempel zusätzlich vorzusehen, ergibt eine aufwändige Lösung hinsichtlich der notwendigen Betätigungselemente für solche Greifer, beispielsweise allein durch Zuführung der notwendigen Energie dorthin.

### III. Darstellung der Erfindung

### a) Technische Aufgabe

Es ist daher die Aufgabe gemäß der Erfindung, eine gattungsgemäße Aufschneide-Maschine sowie ein Verfahren für deren Betrieb zur Verfügung zu stellen, bei der auch bei in einem umfänglich geschlossenen Formrohr geführten Produkt-Stück und Vorwärtsschieben ohne Erreichen eines Längsanschlages ein nur durch Schwerkraft bedingtes Durchrutschen des Produkt-Stückes vermieden wird, insbesondere bei Positions-gesteuertem Quer-Pressstempel oder fehlendem Quer-Pressstempel.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Eine gattungsgemäße Aufschneide-Maschine umfasst üblicherweise
- ein Grundgestell,
- einem am Grundgestell befestigten, in axialer Richtung verlaufenden, stirnseitig beidseits offenen, Formrohr mit einem inneren Formrohr-Hohlraum,
- einem fluchtend zum Formrohr positionierten Längspress-Antrieb, der in axialer Richtung eine Kraft aufbringen kann zum axialen Einfahren eines Längspress-Stempels in das Formrohr vom hinteren Ende her und Vorwärtsschieben sowie Längsverpressen eines darin befindlichen Produkt-Stückes in Richtung Schneidende des Formrohres,
- einer Schneidvorrichtung mit einem Messer, welches vor dem dem Messer benachbarten Schneidende des Formrohres angeordnet ist und insbesondere in einer Querrichtung relativ zum Formrohr verlagerbar ist.

Zusätzlich kann eine solche bekannte Aufschneide-Maschine auch einen Querpress-Antrieb aufweisen, der in radialer Richtung des Formrohres zum Querverpressen eines darin aufgenommenen Produkt-Stückes eine Kraft aufbringen kann zum axialen, dichten Einfahren eines Querpress-Stempels in eine zu einer Seite in offene Formrohr-Rinne, wodurch das umfänglich geschlossene Formrohr gebildet wird.

Erfindungsgemäß ist nahe dem Schneidende oder bis zum Schneidende reichend ein Bremselement zum Anpressen am Produkt-Stück vorhanden, welches über die Innen-Umfangsfläche, also die Innen-Umfangskontur, des Formrohres, in den Formrohr-Hohlraum hinein bewegbar ist, also relativ zum Formrohr beweglich ist und in diese Richtung vorgespannt oder vorspannbar ist.

Nahe am Schneidende bedeutet, dass das Bremselement im unteren Drittel des Formrohres angeordnet ist und/oder so nahe wie möglich an das Schneidende heranreicht.

Durch diese Bremskraft wird das Produkt-Stück daran gehindert, Schwerkraftbedingt im schrägstehenden Formrohr und aus dem Formrohr heraus nach unten zu rutschen.

Vorzugsweise ist das Bremselement am Formrohr befestigt.

Wenn das Bremselement nicht radial nach innen vorgespannt ist, kann es vorzugsweise vollständig außerhalb des Querschnittes des übrigen Formrohr-Hohlraumes angeordnet sein, vorzugsweise in einer Ausnehmung, die in der Innenkontur des Formrohres ausgebildet ist und vorzugsweise auch zum Schneidende des Formrohres hin offen ist.

In einer 1. Bauform ist das Bremselement eine sich primär in Längsrichtung des Formrohres erstreckende Bremsplatte.

Diese kann entweder um eine Schwenkachse an ihrem hinteren Ende verschwenkbar sein, vorzugsweise gegenüber dem Formrohr, insbesondere dem Quer-Pressstempel, oder in Querrichtung zur Längsrichtung, insbesondere linear, bewegbar sein, vorzugsweise durch Parallelverlagerung, wobei dann die Bremsplatte an ihrem hinteren Ende vorzugsweise eine Auflaufschräge aufweist.

Dabei kann die Bremsplatte, zum Beispiel mittels einer oder mehrerer Federn, relativ zum Formrohr vorgespannt sein in den Formrohr-Hohlraum hinein.

Eine solche Bremsplatte kann vollständig innerhalb des Formrohres aufgenommen werden und benötigt dann außerhalb davon keine Umbauten an der umgebenden Maschine.

In einer 2. Bauform ist das Bremselement als linear verfahrbarer, sich primär in radialer Richtung, also einer der Querrichtungen, beweglicher Pressstempel ausgebildet.

Dessen größte Erstreckungsrichtung liegt vorzugsweise in einer radialen Richtung des Formrohres.

Vorzugsweise ist der Bremsstempel in einer Ausnehmung im Umfang des Formrohres geführt, die vorzugsweise auch zum Schneidende des Formrohres hin offen ist.

Ein solcher Bremsstempel kann mittels eines Aktivators, sei es eine Feder oder ein anderer Aktivator, mit Kraft nach radial innen in den Formrohr-Hohlraum hinein vorgespannt sein, wobei der Aktivator vorzugsweise außerhalb des Formrohres angeordnet ist.

Gerade dann kann der Aktivator ein Arbeitszylinder sein, beispielsweise ein Pneumatik-Zylinder, der hinsichtlich des Druckmediums eventuell auch mit einem Arbeitszylinder, der den Längs-Pressstempels oder den Quer-Pressstempels mit Druck beaufschlagt, gekoppelt sein kann.

Sofern die innere Umfangskontur des Formrohr-Hohlraumes gerade Abschnitte aufweist, ist das Bremselement und/oder die Ausnehmung, in der es angeordnet ist, vorzugsweise in einem solchen geraden Abschnitt angeordnet. Dies insbesondere, wenn es sich bei dem Formrohr um ein solches mit nicht veränderbarem Querschnitt des inneren Formrohr-Hohlraumes handelt, wie etwa bei einem einstückig hergestellten Formrohr.

Sofern das Formrohr einen Quer-Pressstempels aufweist, also aus einer Formrohr-Rinne und einem in deren offene Seite passenden Quer-Pressstempel gebildet ist, ist das Bremselement vorzugsweise im Querpress-Stempel angeordnet und in Richtung Boden der Formrohr-Rinne vorgespannt oder umgekehrt.

Auch eine Anordnung des Bremselementes in einer der Seitenwände mit Vorspannung in Richtung zur anderen Seitenwand hin ist möglich.

Bei einem permanent vorgespannten Bremselement wird diese permanente Vorspannkraft vorzugsweise mittels einer Feder, insbesondere einer Druckfeder, oder die Material-Elastizität des Bremselementes selbst aufgebracht.

Bei einem nicht immer vorgespannten, sondern vorspannbaren, Bremselement wird dieses durch einen aktivierbaren und deaktivierbaren, insbesondere steuerbaren, Aktivator wie etwa einen Arbeitszylinder mit Vorspannkraft beaufschlagt, insbesondere mittels oder gekoppelt mit der Vorwärtsbewegung des Längs-Pressstempels oder der Presskraft, mit der der Längs-Pressstempel am Produkt-Stück anliegt.

Sofern die Aufschneide-Maschine über mehrere in einem Querstempel-Revolver untergebrachte Quer-Pressstempel und/oder über mehrere Längs-Pressstempel, untergebracht in einem Längstempel-Revolver, verfügt, ist das, insbesondere vorspannbare, Bremselement nur in der Schneidposition des wenigstens einen dieser Revolver vorhanden und/oder mit Vorspannkraft beaufschlagbar.

Hinsichtlich des Verfahrens zum Aufschneiden eines Produkt-Stückes mit einer Aufschneide-Maschine, die ein Formrohr für das Produkt-Stück sowie ein Messer zum Abtrennen von Scheiben davon unmittelbar davor aufweist, insbesondere einer wie zuvor beschriebenen Aufschneide-Maschine, wird die bestehende Aufgabe dadurch gelöst, dass das Produkt-Stück beim vorwärtsschieben im Formrohr gegen ein unbeabsichtigtes Verschieben gesichert wird durch Anlegen einer Bremskraft am Produkt-Stück in radialer Richtung innerhalb des Formrohres, nahe dessen Schneidende, insbesondere unmittelbar benachbart zu dem Schneidende des Formrohres.

Dadurch kann selbst ein nur noch kleiner im Formrohr verbliebener Rest des Produkt-Stückes - bei ausreichend großer Bremskraft - am unbeabsichtigten Herausrutschen gehindert werden.

Die Bremskraft kann insbesondere von einem Bauteil aufgebracht werden, welches gegenüber dem Rest der Aufschneide-Maschine, insbesondere dem Formrohr, beweglich und insbesondere sich daran abstützend vorgesehen ist, vorzugsweise einem gegenüber dem Formrohr weiter radial außen liegenden Bauteil.

Die Bremswirkung wird vorzugsweise mittels Kraftschluss, insbesondere mittels Reibung, von einem Bremselement aus auf das Produkt-Stück aufgebracht. Formschluss wird vermieden, um Beschädigungen am Produkt-Stück zu vermeiden.

### c) Ausführungsbeispiele

Ausführungsformen gemäß der Erfindung sind im Folgenden beispielhaft näher beschrieben. Es zeigen:
- **Figur 1a:**: die Aufschneide-Maschine in der Ausgangsstellung in der Seitenansicht,
- **Figur 1b:**: die Aufschneide-Maschine betrachtet in der Vertikalen von oben gemäß IIIA - IIIA in **Figur 2b****,**
- **Figur 2a:**: einen Schnitt entlang der vertikalen Längs-Mittelebene mit an den Antrieben befestigten Pressstempeln für das Querverpressen,
- **Figur 2b:**: einen Schnitt entlang der vertikalen Längs-Mittelebene mit beiden Pressstempeln bereits in der Formrohr-Rinne,
- **Figur 3a:**: die Aufschneide-Maschine geschnitten entlang der Schnittebene IA - IA in **Figur 2b****,**
- **Figur 3b:**: die Aufschneide-Maschine von oben betrachtet in der Längspress-Richtung, gemäß **IIIB** - **IIIB,** wie in **Figur 2b** angegeben,
- **Figur 3c:**: einen Schnitt durch die Aufschneide-Maschine geschnittenen entlang der Schnittebene IB - IB in **Figur 2b****,**
- **Figur 4a:**: eine Ausschnitt Vergrößerung aus **Figur 1b** mit einer 1. Bauform eines Bremselementes,
- **Figuren 4b, c:**: die 1. Bauform des Bremselementes gemäß **Figur 4a** in Blickrichtung und Ausschnittvergrößerung aus **Figur 2b** in einer 1. und einer 2. Variante,
- **Figur 5a:**: eine Ausschnitt Vergrößerung aus **Figur 1b** mit einer 2. Bauform eines Bremselementes,
- **Figur 5b:**: die 2. Bauform des Bremselementes gemäß **Figur 5a** in Blickrichtung und Ausschnittvergrößerung aus **Figur 2b****.**

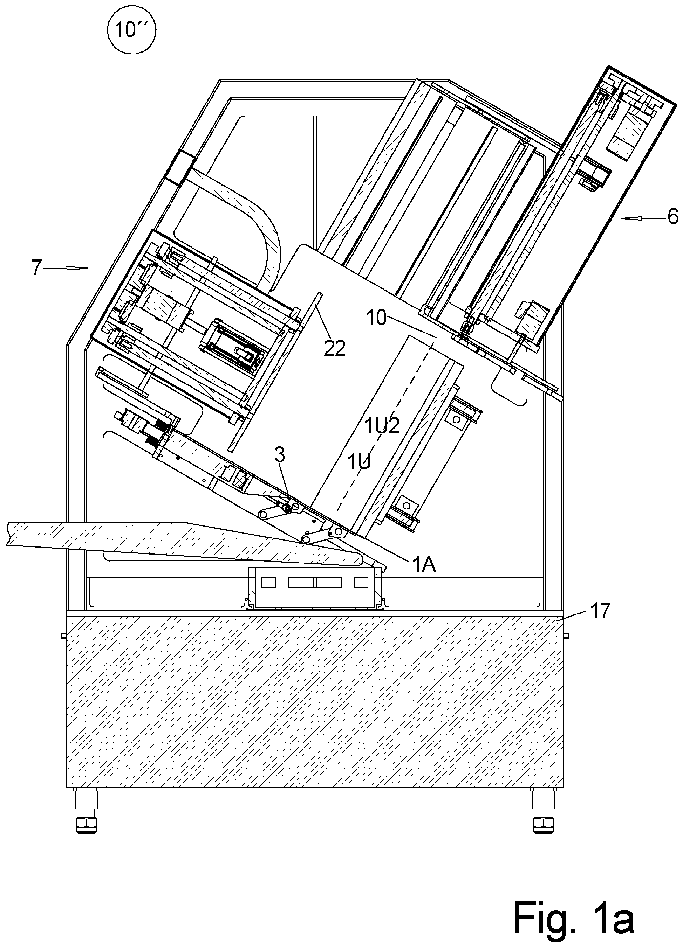

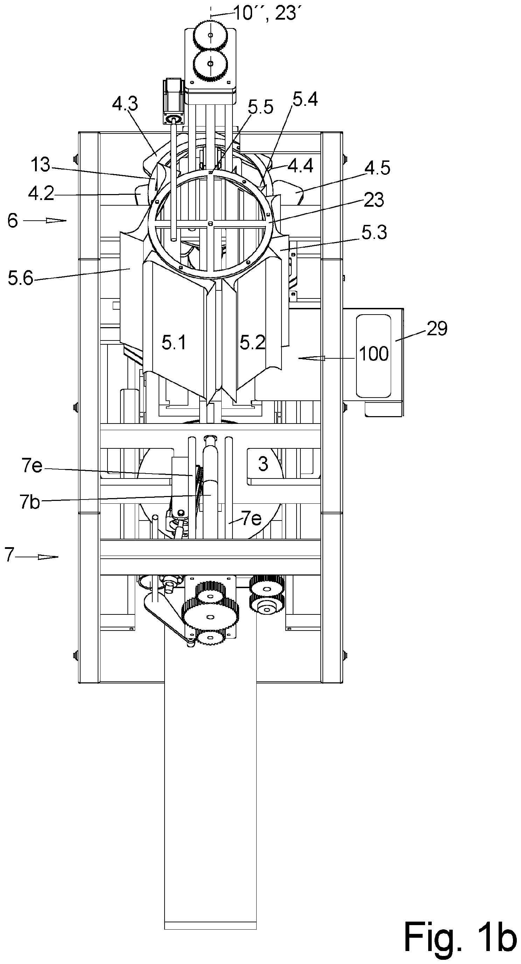

Die **Figur 1a** zeigt die Aufschneide-Maschine - bei vom Grundgestell 17 entfernten Gehäuse-Beplankungen - in der Seitenansicht mit der Formrohr-Rinne 1U im Zentrum dessen Schneid-Ende 1A dem Messer 3 benachbart ist, und **Figur 1b** in der Aufsicht von oben jeweils in einer Ruhestellung, in der sich der Querpress-Antrieb 7 in der zurückgezogenen Ruhestellung befindet und an dessen Aufnahme-Führung 22 noch kein Querpress-Stempel angekuppelt ist, und ebenso sich der Längspress-Antrieb 6 in der zurückgezogenen Ruhestellung befindet und noch kein Längspress-Stempel an ihm angekuppelt ist.

Die Bedien-Einheit 28 der Aufschneiden-Maschine ist aus Übersichtlichkeitsgründen in manchen der Figuren nicht dargestellt.

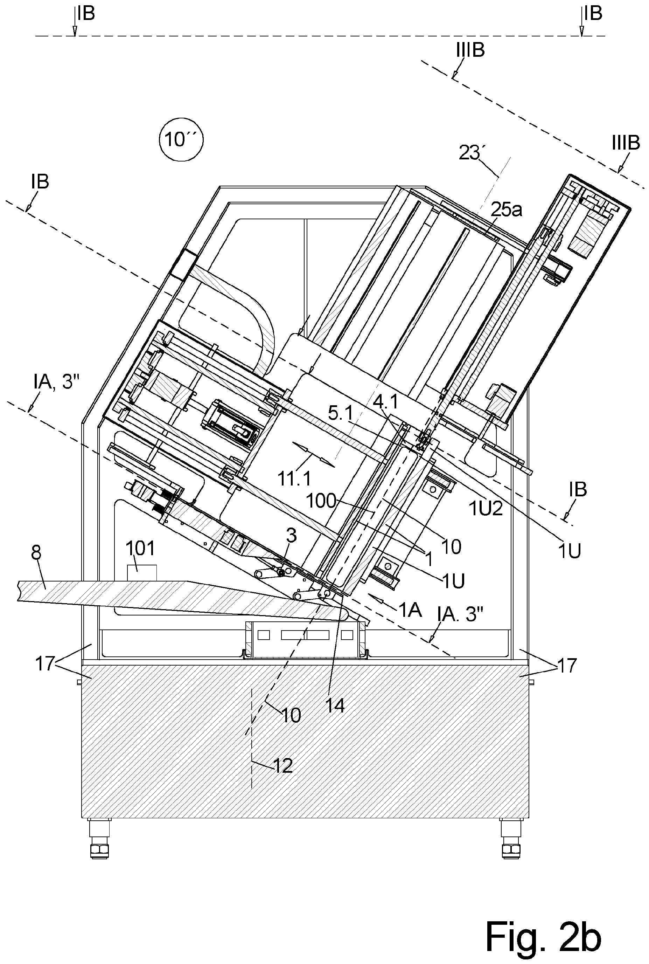

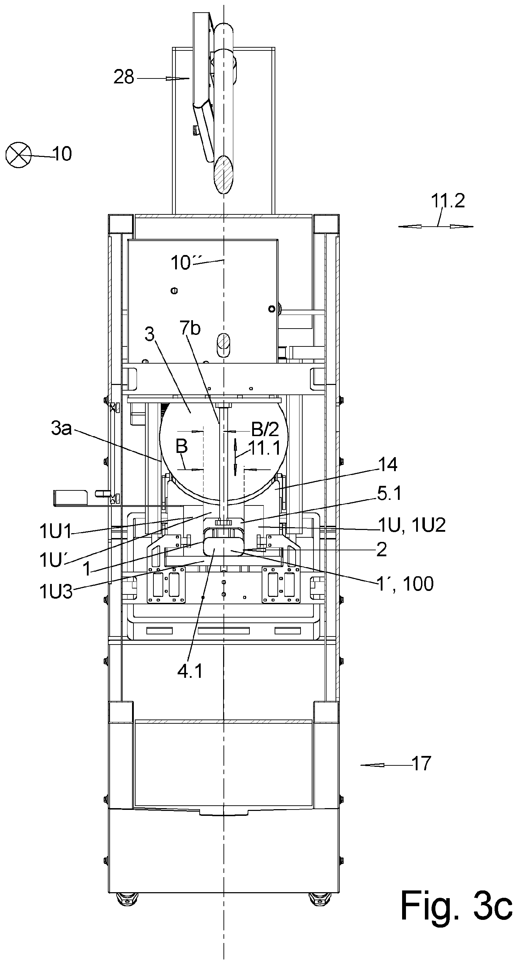

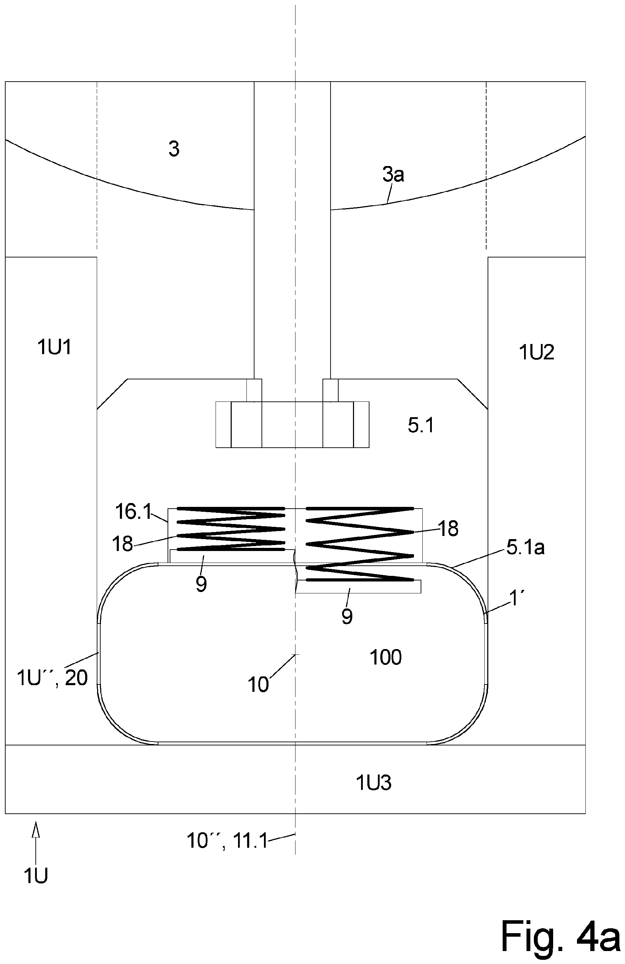

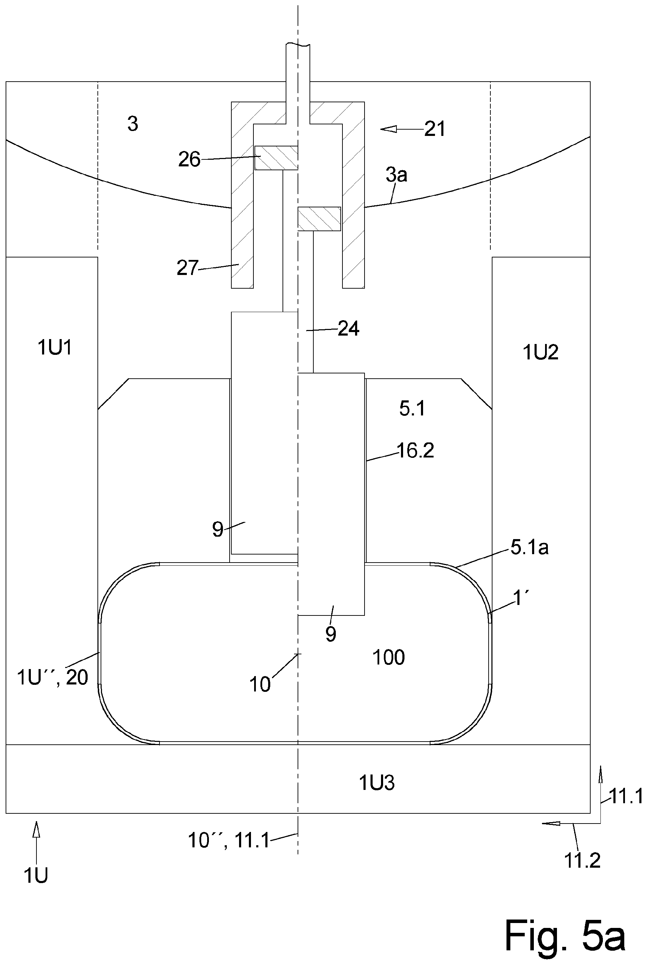

Die **Figuren 2b** **und** **1b** zeigen am besten das erfindungswesentliche, beim Aufschneiden umfänglich geschlossene Formrohr 1, welches in Längsrichtung 10 verläuft, und den Formrohr-Hohlraum 1' in dessen Inneren. Dieser wird gebildet - siehe **Figur 3c** und die Ausschnittvergrößerungen gemäß der **Figuren 4a**, **5a** daraus - durch eine im Querschnitt U-förmige Formrohr-Rinne 1U mit einem Rinnen-Hohlraum 1U' sowie einen Querpress-Stempel 5.1, der von der offenen Längsseite der Formrohr-Rinne 1U mit möglichst geringem Spiel in diese in einer ersten Querrichtung 11.1 oder Querpress-Richtung 11.1, die quer, insbesondere im 90°-Winkel, zur Längsrichtung 10 verläuft, eingeführt wird, sodass dieser den Rinnen-Hohlraum 1U' umfänglich verschließt, vorzugsweise dicht verschließt, wodurch das umfänglich geschlossene Formrohr 1 gebildet wird.

Wie die Seitenansicht der Maschine in **Figur 2b** zeigt, steht die Verlaufsrichtung der Formrohr-Rinne 1U, die axiale Richtung 10 bzw. Längspressrichtung 10, nicht exakt senkrecht, sondern gegenüber der Vertikalen 12 um insbesondere etwa 20 bis 50 Grad so geneigt, dass die offene Längsseite der Formrohr-Rinne 1U etwas nach oben weist, was das Einlegen eines neuen Produkt-Stückes 100 in die Formrohr-Rinne 1U erleichtert, was wie in **Figur 1b** ersichtlich durch Einschieben von der Seite her auf einer Schiebefläche 29 erfolgt.

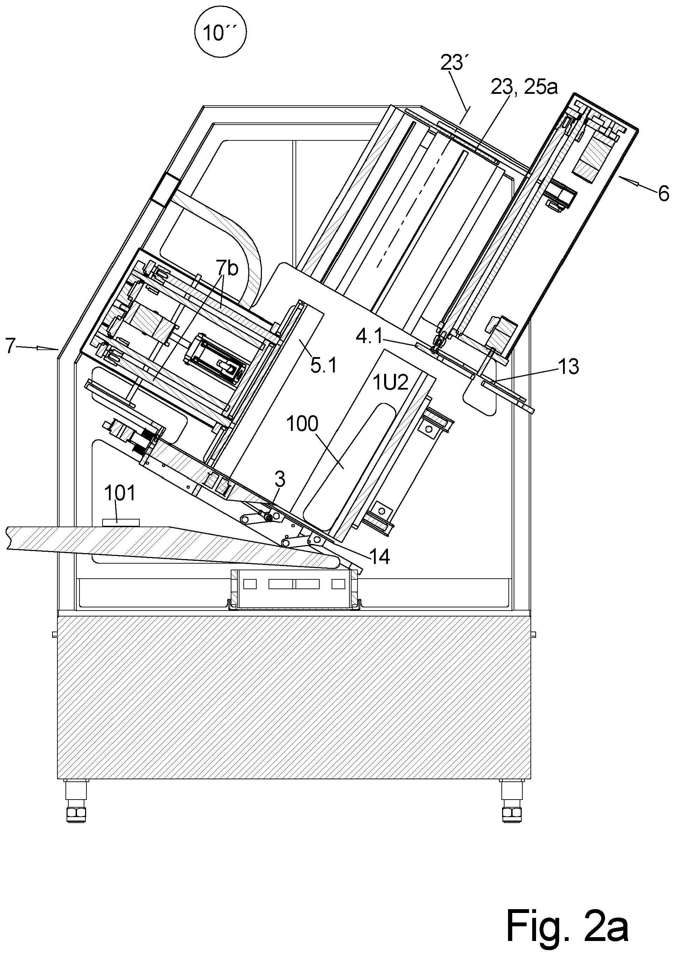

Wie am besten die **Figur 2a**, **b** **und 3c** zeigen, besteht die Formrohr-Rinne 1U aus zwei Seitenwänden 1U1, 1U2, sowie einem Boden 1U3, wobei die Seitenwände 1U1, 1U2 in ihrem lichten Querabstand, der Breite B, zueinander einstellbar sind durch Verfahren, insbesondere entlang des Bodens 1 U3, in der zweiten Querrichtung 11.2, die quer, insbesondere jeweils im 90°-Winkel, zu den der axialen Richtung 10 als auch der 1. Querrichtung 11.1 verläuft.

Die Seitenwände 1U1, 1U2 befinden sich immer symmetrisch zur vertikalen Längsmittelebene 10", die aufgespannt wird durch die erste Querrichtung 11.1 sowie die Längsrichtung 10 und welche ortsfest parallel zu den Innenflächen der Seitenwände 1U1, 1U2 und/oder lotrecht auf der Fläche des Bodens 1U3 verläuft, und zu den Innenflächen der beiden Seitenwände 1U1, 1U2 den beidseits gleich großen Abstand B/2 einnimmt.

Die Seitenwände 1U1, 1U2, genauer gesagt die Innenflächen der Seitenwände, verlaufen vorzugsweise parallel zueinander, um einen Querpress-Stempel 5.1 mit fixer Breite passgenau dazwischen einschieben zu können.

Ein in diesem Formrohr 1 befindliches und in der ersten Querrichtung 11.1 verpresstes Produkt-Stück 100 aus z.B. Frischfleisch wird zusätzlich - wie **Figur 2b** zeigt - auch in Längsrichtung 10 im Formrohr 1 verpresst mittels eines Längspress-Stempels 4.1.

Der Längspress-Stempel 4.1 füllt den Querschnitt des Formrohr-Hohlraumes 1' zunächst im hinteren Endbereich dicht aus und wird danach in axialer Richtung 10 weitergeschoben, sodass das -in den **Figuren 2a****, b** dargestellte - Produkt-Stück 100 zunächst in axialer Richtung 10 gegen einen Längspress-Anschlag - hier die an die schneidseitige Stirnfläche des Formrohr-Revolvers 1 angelegte Anschlagplatte 14 - verpresst werden kann. Danach kann - bei von dieser schneidseitigen Stirnfläche des Formrohres 1 beabstandeter Anschlagplatte 14 - das das Produkt-Stück 100 über das vordere, untere Ende, das Schneidende 1A, des Formrohres 1 vorstehen und dort von einem entlang der vorderen Stirnfläche des Formrohres 1 in Querrichtung bewegbaren Messer 3 eine Scheibe 101 vom vorderen Ende des Produkt-Stückes 100 abgetrennt werden, welche dann auf den Abförderer 8 fällt und abtransportiert wird.

Die Seitenwände 1U1, 1U2 können auf bestimmte, festgelegte Querabstände, zueinander und damit zur Längs-Mittelebene 10" verfahren werden, und für jede dieser definierten Breiten B, also inneren freien Breiten, der Formrohr-Rinne 1U ist ein Querpress-Stempel 5.1 bis 5.6 mit einer analogen Breite b1 bis b5 vorhanden, da die Querpress-Stempel in der Breite nicht variabel sind.

Zu diesem Zweck werden die Querpress-Stempel 5.1 bis 5.6 lösbar in einem Querstempel-Revolver 23 zwischen einem oberen und einem unteren Haltering 25 a, b vorgehalten - wie am besten in **Figur 1b** und **Figur 3c** ersichtlich -, dessen Drehachse oder Schaltachse 23' parallel zur Längsrichtung 10 des Formrohres 1 verläuft, aber zum Formrohr 1 so versetzt ist, dass - der der Formrohr-Rinne 1U zugewandte und nächstliegende, also in der Schneidposition 2 befindliche, Querpress-Stempel 5.1 sich noch radial und axial außerhalb der Formrohr-Rinne 1U befindet, und zwar in fluchtender Lage zu der Aufnahme-Führung 22 für einen Querpress-Stempel am Querpress-Antrieb 7.

Dieser Querpress-Stempel 5.1 kann aus dem Querstempel-Revolver 23 automatisch herausgezogen und an der Aufnahme-Führung 22 befestigt werden, wobei die Seitenwände 1U1 und 1U2 der Formrohr-Rinne 1U auf einen zu diesem Querpress-Stempel 5.1 passenden Quer-Abstand eingestellt werden.

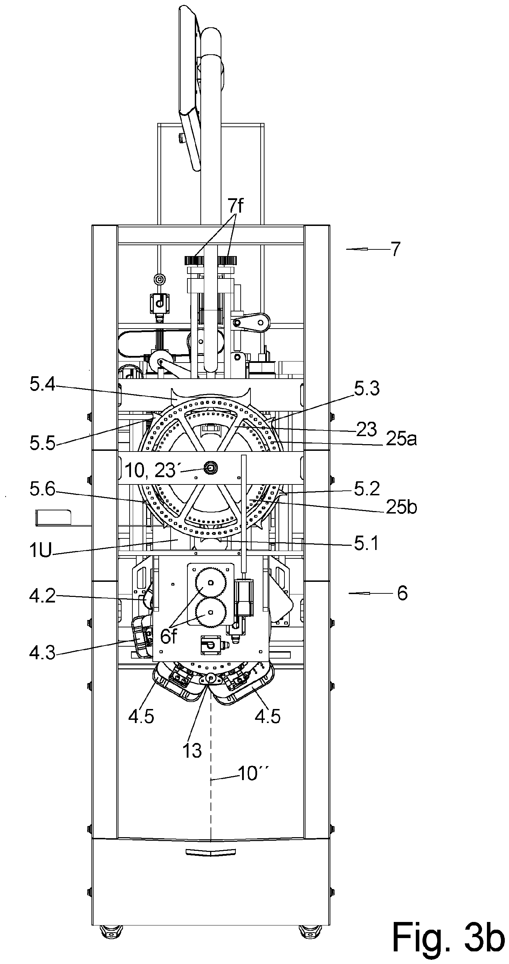

In **Figur 3b** ist der Längsstempel-Revolver 13 mit den im Kreis daran lösbar angeordneten Längspress-Stempel 4.1 - 4.6, von denen je nach vorgesehenen Querschnitt des Formrohr-Hohlraumes 1' ein bestimmter automatisch ausgewählt und am Längspress-Antriebes 6 befestigt wird zum axialen Einführen in das Formrohr 1.

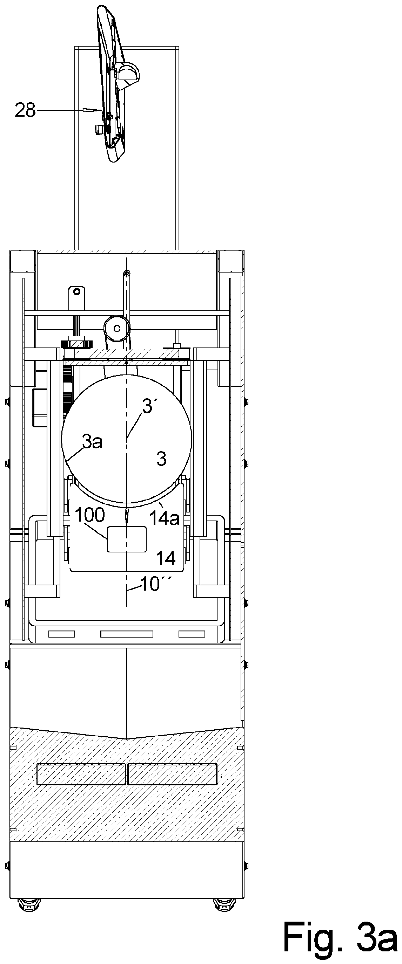

in **Figur 3a** ist ferner das kreisscheibenförmige Messer 3 gut zu erkennen sowie die daneben angeordnete Anschlagplatte 14, deren Funktionskante 14a konvex gekrümmt ist und parallel zum Außenumfang der Umfangskante, der Schneidkante 3a des Messers 3, verläuft, in der Regel in einem geringen radialen und meist auch axialen Abstand hierzu. Diese Krümmung ist notwendig, falls von dem Produkt-Stück 100 abzutrennen Scheiben S abgetrennt werden, während das Produkt-Stück 100 mit seinem vorderen Ende gegen die Anschlagplatte 14 drückt.

**Figur 3c** zeigt ferner die Betätigungsvorrichtungen für die beiden Seitenwände 1U1 und 1U2, um diese entlang des Bodens 1U3 zu verschieben und damit die Breite B der Formrohr-Rinne 1U auf einen vorgegebenen Wert entsprechend der Breite eines der Querpress-Stempel 5.1 - 5.6 einzustellen.

Bei Aufschneide-Maschinen, in denen das unregelmäßig geformte Produkt-Stück 100 zunächst in einem, insbesondere umfänglich geschlossenen, Formrohr 1 verpresst wird, um gewichtsgenaue Scheiben erzeugen zu können, kann ein Problem auftreten, falls beim Abtrennen der Scheibe 101 diese in axialer Richtung 10 am vorderen Ende nicht von der Anschlagplatte 14 abgestützt wird, was insbesondere dann der Fall ist, wenn Scheiben 101 mit großer Dicke, sogenannte Scheiben-Stücke 101 - wie beispielhaft in **Figur 2b** auf dem Abförderer 8 dargestellt - abgetrennt werden sollen.

Denn dann wird das vordere Ende des Produkt-Stückes 100 mittels des Längs-Preisstempels 4.1 wie immer über die Messer-Ebene 3" hinaus vorgeschoben, wobei der Querschnitt des Formrohr-Hohlraumes 1' fixiert ist durch den in eine bestimmte Querposition vorgefahrenen und eingestellten Querpreis-Stempel 5.1.

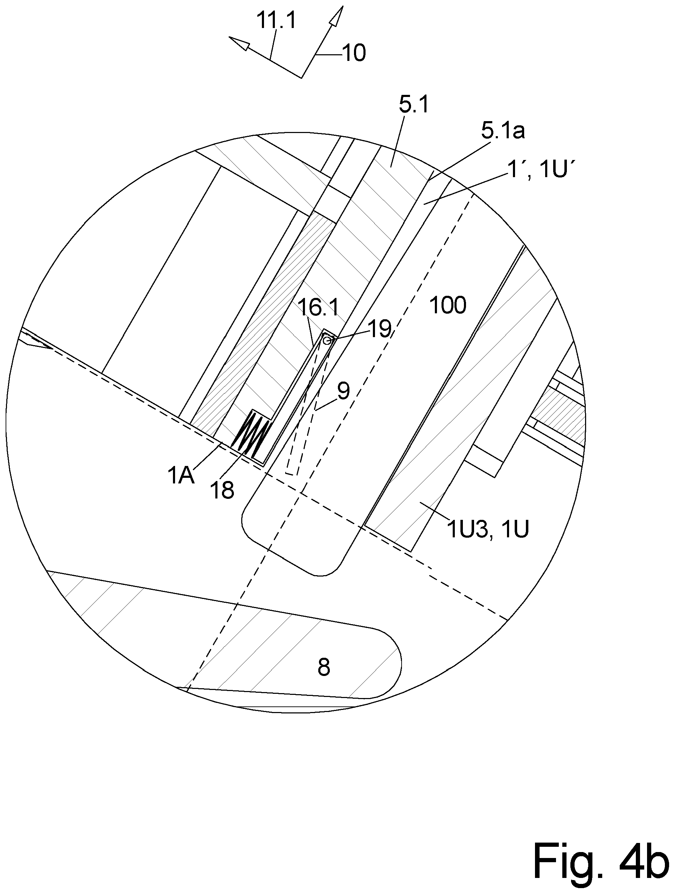

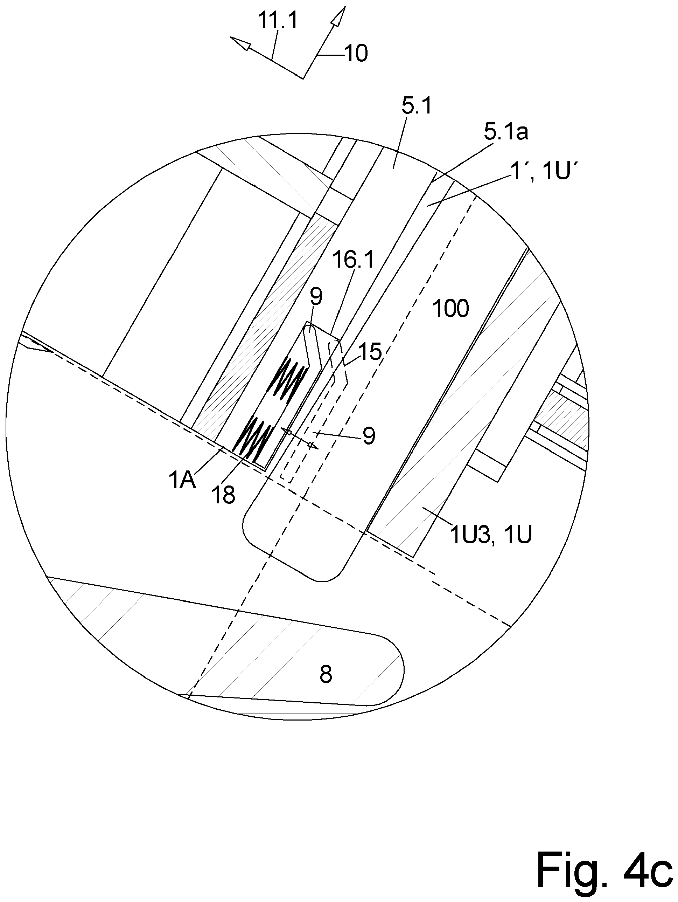

Durch die am vorderen Ende fehlende Abstützung des Produkt-Stückes 100 dehnt sich dieses in Längsrichtung 10 aus und verringert dadurch seinen Querschnitt, wie in den **Figuren 4b****,** c und **Figur 5a** dargestellt, sodass es an einer ausreichenden Reibung gegenüber dem Innenumfang des Formrohres 1 mangeln kann und das Produkt-Stück 100 ohne weitere Maßnahmen zu weit nach vorne unten rutscht.

Solche Gegenmaßnahmen in Form eines zusätzlichen Bremselementes zeigen die **Figuren 4a bis 5b****:**
Die **Figuren 4a****,** **b****,** **c** zeigen eine 1. Bauform eines Bremselementes 9 in Form einer Bremsplatte 9, die am Quer-Pressstempels 5.1 beweglich befestigt ist und etwa in Querrichtung 11.1 zur Längspress-Richtung 10 in den Formrohr-Hohlraum 1' hinein verlagerbar ist in Richtung Boden 1U3 der Formrohr-Rinne 1U.

Wie **Figur 4a** zeigt, ist die Bremsplatte 9 - dargestellt in zwei verschiedenen Funktionsstellungen - hierfür in einer Ausnehmung 16.1 der Pressfläche 5.1a des Quer-Pressstempels 5.1 aufgenommen, die gemäß der **Figuren 4b****,** **4c** nicht nur zum Formrohr-Hohlraum 1' hin offen ist, sondern auch zum stirnseitigen Schneidende 1A des Formrohres 1 und damit des Quer-Pressstempels 5.1.

In einer 1. Variante dieser Bauform gemäß **Figur 4b** ist die Bremsplatte 9, deren Hauptebene sich im Wesentlichen entlang der Pressfläche 5.1a des Quer-Pressstempels 5.1 erstreckt, um eine in der zweiten Querrichtung 11.2 verlaufende Schwenkachse 19 an ihrem hinteren Ende schwenkbar gegenüber dem Quer-Pressstempel 5.1 gelagert und ist mittels mindestens einer sich am Quer-Preisstempel 5.1 abstützenden Druckfeder 18, die vorzugsweise am von der Schwenkachse 19 gegenüberliegenden Ende angreift, in Richtung des Bodens 1U3 der Formrohr-Rinne 1 vorgespannt. Dabei erstreckt sich die Bremsplatte 9 vorzugsweise bis zum Schneidende 1A des Quer-Pressstempels 5.1.

Wenn die Feder 18 ausreichend stark zusammengedrückt wird, kann die Bremsplatte 9 vollständig innerhalb der Ausnehmung 16.1 Platz finden und steht nicht in den Formrohr-Hohlraum 1' vor. Vorzugsweise ist die Bremsplatte 9 eine ebene Platte mit gleichbleibender Wandstärke.

Wenn im vorderen Endbereich des Formrohr-Hohlraumes 1' der Querschnitt des Produkt-Stückes 100 den Querschnitt des Formrohr-Hohlraumes 1' nicht mehr vollständig ausfüllt, drückt die Kraft der einen oder wie in **Figur 4a** dargestellt beiden nebeneinander angeordneten Federn 18 die Bremsplatte 9 mit ihrem freien Ende gegen das Produkt-Stück 100 mit einer solchen Kraft, die groß genug ist, um ein lediglich Schwerkraft-bedingtes Abrutschen des Produkt-Stückes 100 nach unten zu verhindern.

**Figur 4c** zeigt in einer 2. Variante dieser 1. Bauform eine Bremsplatte 9 - dargestellt in zwei verschiedenen Funktionsstellungen - die in ihren hinteren Bereich gekröpft ist und eine in der 2. Querrichtung 11.2 verlaufende, außenseitige Biegekante aufweist.

Da der sich stromabwärts der Biegekante erstreckende Teil der Bremsplatte 9 parallel zur Pressfläche 5.1a des Quer-Pressstempels 5.1 verläuft, bildet der stromaufwärtige, gekröpfte Teil eine außenseitige Auflaufschräge 15, an der ein im Formrohr-Hohlraum 1' von oben herangeschobenes Produkt-Stück 100 auftrifft und die Bremsplatte 9 gegen die Kraft der in diesem Fall in Längspress-Richtung 10 beabstandeten zwei vorhandenen Druckfedern 18 in die Ausnehmung 16.1 zurückdrückt.

Die Federn 18 sowie die Bremsplatte 9 und die Ausnehmung 16.1 sind so dimensioniert, dass auch bei unbelasteten Federn 18 das hintere Ende der Bremsplatte 9, also die Auflaufschräge 15, sich noch innerhalb der Ausnehmung 16.1 befindet, um ein Verhaken eines herannahenden Produkt-Stückes 100 daran zu vermeiden.

Ansonsten ist die Wirkung die gleiche wie bei der 1. Variante gemäß **Figur 4b****.**

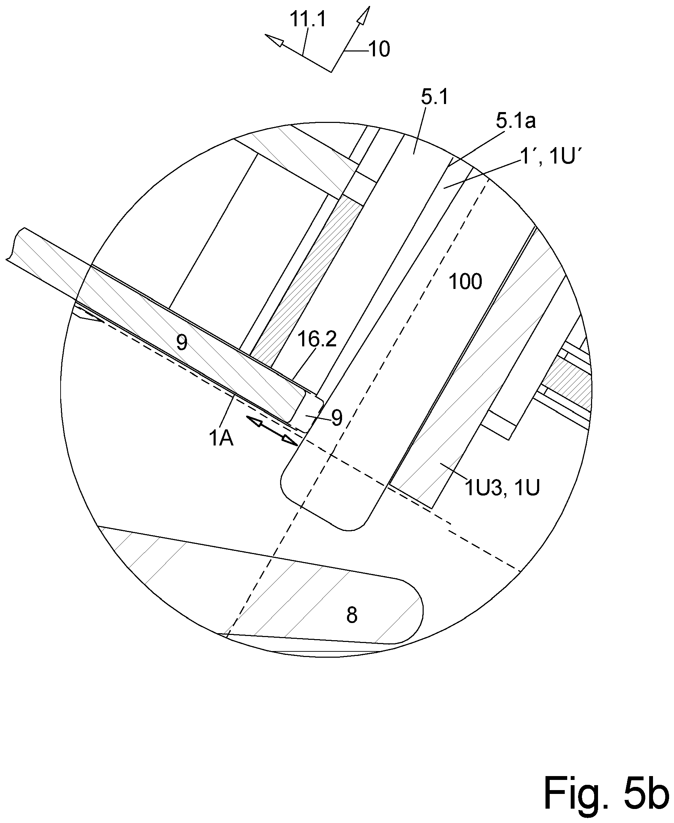

Die **Figuren 5a****, b** zeigen in einer 2. Bauform ein Bremselement 9 in Form eines Bremsstempels 9, der sich im Wesentlichen in den beiden Querrichtungen 11.1 und 11.2 erstreckt, und nur mit seiner gegen den Boden 1U3 der Formrohr-Rinne 1 weisenden Stirnfläche gegen das Produkt-Stück 100 pressen kann.

Zu diesem Zweck ist der Bremsstempel 9 zwar ebenfalls in einer Ausnehmung 16.2 des Quer-Pressstempels 5.1 angeordnet, die zum Formrohr-Hohlraum 1' hin offen ist und vorzugsweise auch zum stirnseitigen Schneidende 1A des Quer-Pressstempels 5.1 hin, aber vorzugsweise nicht an dem Quer-Pressstempels befestigt, sondern an einem abseits des Quer-Pressstempels 5.1 angeordneten Aktivator, der den Bremsstempel 9 in der ersten Querrichtung 11.1 beaufschlagt.

Wie in **Figur 5a** dargestellt, kann es sich bei dem Aktivator beispielsweise um einen Arbeitszylinder 21 handeln, etwa einen Pneumatik-Zylinder, sodass der Quer-Pressstempel 5.1 an der Kolbenstange 24 eines in dieser Verlagerungsrichtung des Bremsstempels 9, hier der ersten Querrichtung 11.1, in einem Zylinder 27 verlagerbaren Kolben 26 - wiederum dargestellt in zwei verschiedenen Funktionsstellungen - befestigt ist.

Falls der Längs-Pressstempel 4.1 ebenfalls mittels eines Arbeitszylinders bewegt wird, können die beiden Arbeitszylinder über ihr Druckmedium miteinander verbunden werden, sodass beide immer unter dem gleichen Arbeitsdruck stehen.

### BEZUGSZEICHENLISTE

- 1: Formrohr
- 1': Formrohr-Hohlraum
- 1U: Formrohr-Rinne
- 1U': Rinnen-Hohlraum
- 1U1,1U2: Seitenwand
- 1U3: Boden
- 1A: Schneid-Ende
- 2: Schneidposition
- 3: Messer
- 3': Messerachse
- 3': Messerebene
- 3a: Schneide, Schneidkante
- 4.1 - 4.5: Längspress-Stempel
- 5.1 - 5.6: Querpress-Stempel
- 5.1a: Pressfläche
- 6: Längspress-Antrieb
- 7: Querpress-Antrieb
- 8: Abförderer
- 9: Bremselement, Bremsplatte, Bremsstempel
- 10: axiale Richtung, Längsrichtung, Längspress-Richtung
- 10": Längs-Mittelebene
- 11: Querrichtung, radiale Richtung
- 11.1: erste Querrichtung, Querpress-Richtung
- 11.2: zweite Querrichtung
- 12: Vertikale
- 13: Längsstempel-Revolver
- 13': Drehachse, Schaltachse
- 14: Anschlagelement, Anschlagplatte
- 14a: Funktionskante
- 15: Auflaufschräge
- 16.1, 16.2: Ausnehmung
- 17: Grundgestell
- 18: Feder
- 19: Schwenkachse
- 20: Umfangskontur
- 21: Arbeitszylinder
- 22: Aufnahme-Führung
- 23: Querstempel-Revolver
- 23': Schaltachse
- 24: Kolbenstange
- 25a, b: Haltering
- 26: Kolben
- 27: Zylinder
- 28: Bedien-Einheit
- 29: Auflagefläche

- 100: Produkt-Stück
- 101: Scheibe, Scheiben-Stück

- A: Abstand
- B: Breite Formrohr-Rinne
- b1 - b5: Breite Quer-Pressstempel

## Patentansprüche

1. **Aufschneide-Maschine** zum Aufschneiden eines Produkt-Stückes (100) aus elastischem Material in Scheiben (101) mit
- einem Grundgestell (17),
- einem am Grundgestell (17) befestigten, in axialer Richtung (10) verlaufenden, stirnseitig beidseits offenen, Formrohr (1) mit einem inneren Formrohr-Hohlraum (1'),
- einem fluchtend zum Formrohr (1) positionierten Längspress-Antrieb (6), der in axialer Richtung (10) eine Kraft aufbringen kann zum axialen Einfahren eines Längspress-Stempels (4.1 - 4.5) in das Formrohr (1) vom hinteren Ende (1b) her und Vorwärtsschieben sowie Längsverpressen des darin befindlichen Produkt-Stückes (100) in Richtung Schneidende (1a) des Formrohres (1),
- einer Schneidvorrichtung mit einem Messer (3), welches vor dem Schneidende (1A) des Formrohres (1) angeordnet ist und insbesondere in einer Querrichtung (11) relativ zum Formrohr (1) verlagerbar ist,
**dadurch gekennzeichnet, dass**
- nahe (definieren) dem Schneidende (1A) ein über die Innen-Umfangsfläche des Formrohres (1) in den Formrohr-Hohlraum (1') hinein vorstehendes und, insbesondere gegenüber dem Formrohr (1), radial vorgespanntes oder vorspannbares Bremselement (9) zum Anpressen am Produkt-Stück (100) vorhanden ist.

2. Aufschneide-Maschine nach Anspruch 1,
**dadurch gekennzeichnet, dass**
- das Bremselement (9) zumindest in radialer Richtung des Formrohr-Hohlraumes (1') relativ zum Formrohr (1) beweglich ist
und/oder
- das Bremselement (9) am Formrohr (1) befestigt ist
und/oder
- ohne Vorspannung das Bremselement (9) vollständig außerhalb des Querschnittes des übrigen Formrohr-Hohlraumes (1') liegt.

3. Aufschneide-Maschine nach einem der vorhergehenden Ansprüche,
**dadurch gekennzeichnet, dass**
das Bremselement (9) eine primär in Längsrichtung (10) des Formrohr-Hohlraumes (1') verlaufende Bremsplatte (9) ist, die insbesondere
- entweder um eine Schwenkachse (19) an ihrem hinteren Ende verschwenkbar ist
- oder in Querrichtung (11.1, 11.2) linear bewegbar ist und vorzugsweise am hinteren Ende einen Auflaufschräge (15) aufweist.

4. Aufschneide-Maschine nach einem der vorhergehenden Ansprüche,
**dadurch gekennzeichnet, dass**
das Bremselement (9) ein primär in Querrichtung (11.1, 11.2) linear verfahrbarer Bremsstempel (9) ist,
- dessen größte Erstreckungsrichtung insbesondere in Querrichtung (11.1, 11.2) liegt
und/oder
- der insbesondere in einer Ausnehmung (16) im Umfang des Formrohres (1) geführt ist.

5. Aufschneide-Maschine nach einem der vorhergehenden Ansprüche, wobei das Formrohr (1) einen nicht veränderbaren Querschnitt mit einer Umfangskontur (20) des inneren Formrohr-Hohlraumes (1') aufweist und das Formrohr (1) insbesondere umlaufend um den Formrohr-Hohlraum (1') einstückig ausgebildet ist,
**dadurch gekennzeichnet, dass**
bei einer Umfangskontur (20) mit geraden Abschnitten das Bremselement (9) in einem solchen geraden Abschnitt angeordnet ist.

6. Aufschneide-Maschine nach einem der vorhergehenden Ansprüche, wobei das Formrohr (1) aufweist
- eine Formrohr-Rinne (1U) mit einer offenen Längsseite und einem stirnseitig beidseits offenen Rinnen-Hohlraum (1U'),
- einen Querpress-Stempel (5.1 - 5.6), der in die offene Seite der Formrohr-Rinne (1U) passt zur Bildung des Formrohres (1),
**dadurch gekennzeichnet, dass**
das Bremselement (9) im Querpress-Stempel (5.1 - 5.6) oder gegenüber im Boden (1U3) der Formrohr-Rinne (1U) angeordnet ist.

7. Aufschneide-Maschine nach einem der vorhergehenden Ansprüche,
**dadurch gekennzeichnet, dass**
das permanent vorgespannte Bremselement (9) mittels der Kraft einer Feder (18) oder seiner Material-Elastizität vorgespannt ist.

8. Aufschneide-Maschine nach einem der vorhergehenden Ansprüche,
**dadurch gekennzeichnet, dass**
das vorspannbare Bremselement (9) durch die Vorwärtsbewegung des Längs-Pressstempels (4.1) oder die Presskraft des Längs-Pressstempels (4.1 vorgespannt wird.

9. Aufschneide-Maschine nach einem der vorhergehenden Ansprüche,
**dadurch gekennzeichnet, dass**
das vorspannbare Bremselement (9)
- nur in der Schneidposition (2) des Querstempel-Revolvers (23) und/oder des Längsstempel-Revolvers (13) vorhanden ist und/oder
- nur in der Schneidposition (2) des Querstempel-Revolvers (23) und/oder des Längsstempel-Revolvers (13) mit der Vorspannkraft beaufschlagbar ist.

10. **Verfahren** zum Aufschneiden eines Produkt-Stückes (100) mit einer Aufschneide-Maschine, die ein Formrohr (1) für das Produkt-Stück (100) sowie ein Messer (3) zum Abtrennen von Scheiben (101) unmittelbar vor dem Schneidende (1A) des Formrohres (1) aufweist, insbesondere einer Aufschneide-Maschine nach einem der vorhergehenden Ansprüche,
**dadurch gekennzeichnet, dass**
das Produkt-Stück (100) beim Vorwärtsschieben im Formrohr (1) gegen ein unbeabsichtigtes Verschieben gesichert ist durch Anlegen einer Bremskraft am Produkt-Stück (100) in radialer Richtung zur Längsrichtung (10) des Formrohres (1) nahe dessen, insbesondere unmittelbar benachbart zu dem, Schneidende (1A) des Formrohres (1).

11. Verfahren nach Anspruch 10,
**dadurch gekennzeichnet, dass**
- die Bremskraft von einem gegenüber dem Rest der Aufschneiden-Maschine beweglichen Bauteil aufgebracht wird,
- insbesondere vom Formrohr (1) oder einem gegenüber dem Formrohr radial weiter außen liegenden Bauteil aufgebracht wird.

12. Verfahren nach Anspruch 10 oder 11,
**dadurch gekennzeichnet, dass**
die Bremskraft mittels Kraftschluss, insbesondere Reibung, gegenüber dem Produkt-Stück (100) aufgebracht wird.
